# EUROPÄISCHE PATENTSCHRIFT

(11) **EP 1 246 709 B1**
(45) Veröffentlichungstag und Bekanntmachung des Hinweises auf die Patenterteilung: **04.06.2003**
(21) Anmeldenummer: 01907416.0
(22) Anmeldetag: 08.01.2001
(51) Int. Cl.: B23K 9/29

(54) **STROMDÜSE UND SCHWEISSBRENNER MIT DIESER STROMDÜSE**
STREAM NOZZLE AND WELDING TORCH WITH THIS NOZZLE
BUSE ET TORCHE DE SOUDAGE AVEC CETTE BUSE

(30) Priorität: 11.01.2000 AT 200027
(43) Veröffentlichungstag der Anmeldung: 09.10.2002
(73) Patentinhaber: Alexander Binzel Schweisstechnik GmbH & Co. KG, 35418 Buseck (DE)
(72) Erfinder: Hoffmann, Hans, 5026 Salzburg (AT)
(74) Vertreter: Müller, Eckhard, Dr.
(86) Internationale Anmeldenummer: EP0100140
(87) Internationale Veröffentlichungsnummer: WO01051242

(56) Entgegenhaltungen:
- EP-A- 0 544 386
- US-A- 3 659 076
- US-A- 3 755 648
- US-A- 4 158 763

## Beschreibung

Die Erfindung betrifft eine Stromdüse gemäß Oberbegriff des Anspruchs 1 (siehe, z.B. EP-A- 0 033 312) und einen Schweißbrenner mit einer solchen Stromdüse.

Die Stromdüse, auch Kontaktdüse genannt, besteht üblicherweise aus Elektrolyt-Kupfer oder aus einer verschleißfesteren Kupfer-Chrom-Zirkonium-Legierung. Daneben gibt es weitere Legierungsvarianten, z.B. mit Beryllium. Aufgabe der Stromdüse ist die Stromübertragung auf den und die Führung des Elektrodendrahtes. Für gute Prozeßsicherheit ist ein optimaler Stromübergang vom Düsenstock zur Stromdüse notwendig. Außerdem muß die Stromdüse über den Anbringungsbereich erhebliche Wärme übertragen. In der Praxis werden Stromdüsen bisher in überwiegendem Maß ohne Oberflächenbehandlung, d.h. blank oder kupferblank,
eingesetzt, wobei sie über eine Schraubverbindung oder eine Steckverbindung austauschbar am Düsenstock befestigt werden. Beim Schweißen auftretende Schweißperlen oder Schweißspritzer zeigen die unerwünschte Tendenz, auf der freiliegenden Oberfläche der Stromdüse anzuhaften. Dies kann zu negativen Beeinflussungen der Strömungsverhältnisse des Schutzgases führen, das außen entlang der Stromdüse zur Schweißstelle strömt. An der Stirnfläche und in der Nähe des Austritts des Elektrodendraht-Durchgangskanals haftende Schweißspritzer können durch Reibung an dem Elektrodendraht den Vorschub behindem. In der Praxis sind aus diesen Gründen Stromdüsen bekannt, die zumindest auf ihrer Mantelfläche und der Stirnfläche eine metallische Beschichtung in Form einer Verchromung oder Vernickelung tragen. Diese Beschichtung soll einer verbesserten Reflexion der Lichtbogenstrahlung (verringerte Wärmeaufnahme) und auch dazu dienen, das Anhaften der Schweißspritzer zu verhindern (Antihaftwirkung). Durch Verchromen oder Vernickeln gebildete Beschichtungen sind nicht nur teuer, sondern sie erfüllen die an sie gestellten Erwartungen nicht in zufriedenstellendem Maß.

Dazu kommt, dass Stromübergangsprobleme dann auftreten, wenn die Beschichtung bis in den Anbringungsbereich der Stromdüse reicht, vermutlich weil der Stromübergang abhängig von der Schichtdicke schwankt. Es ist deshalb erforderlich, beim Aufbringen der Beschichtung den für den Stromübergang vorgesehen Anbringungsbereich abzudecken. Dies ist aufwendig.

Ein gattungsgemäßer Schweißbrenner für sich während des Schweißvorganges verbrauchenden und kontinuierlich nachgeführten Schweißdraht ist bekannt aus EP-A- 00 33312. Die Stromdüse, die in ihrem Durchgangskanal den beim Schweißen vorwärts geschobenen Schweißdraht bis nahe an den Schweißbereich führt, ist im Durchgangskanal, an der Stimfläche und außen angrenzend an die Stimfläche mit Wolfram überzogen, oder sogar vollständig aus Wolfram ausgebildet Das Wolfram soll die Lebensdauer der Düsenspitze bei einem Schweißverfahren verlängern, bei dem am Schweißbeginn ein vorwärmender Lichtbogen direkt zwischen der Stromdüse und dem Werkstück erzeugt wird.

Bei einem elektrischen Schutzgas-Schweißbrenner mit fixierter, sich nicht verbrauchender Elektrode gemäß US 33 09 492a wird die Elektrode in einer Spannhülse festgelegt, die in einer vorderen Konusfassung eines zwecks Kühlung doppelwandigen Hauptkörpers verspannt ist Die freie Stirnfläche der Spannhülse ist in großem axialem Abstand vom Schweißbereich und im Inneren einer langgestreckten, selbständig gekühlten Gasdüse positioniert, so dass sie gegen Schweißspritzer und zu starke Erwärmung durch Lichtbogenstrahlung geschützt ist. Zur Verbesserung des Stromübergangs vom Hauptkörper über die Spannhülse in die Elektrode sind der Hauptkörper und die Spannhülse durch Eintauchen mit Silber beschichtet.

Der Erfindung liegt die Aufgabe zugrunde, einen Schweißbrenner der eingangs genannten Art sowie eine Stromdüse für einen solchen Schutzgas-Schweißbrenner anzugeben, die kostengünstig eine optimale Antihaft- und Reflexionswirkung erzielen lassen. Teil der Aufgabe soll sein, dass die metallische Beschichtung keinen negativen Einfluss auf den Stromübergang nimmt, sondem gegebenenfalls sogar den Stromübergang verbessert.

Die gestellte Aufgabe wird mit den Merkmalen des Anspruches 1 gelöst.

Überraschend führt eine Silberbeschichtung zu hervorragenden Antihaft- und Reflexionswirkungen. Selbst wenn sich die Silberbeschichtung bis in den Anbringungsbereich erstrecken sollte, hat sie keinen negativen Einfluss auf den Stromübergang, sondern verbessert sie sogar den Stromübergang. Die Wärmeübertragungsfähigkeit einer Silberbeschichtung ist ohnedies optimal. Das Aufbringen der Silberbeschichtung lässt sich kostengünstig durchführen, insbesondere in einer Massenproduktion. Da die Silberbeschichtung keinen negativen Einfluss auf den Stromübergang hat, sondern diesen sogar verbessert, braucht beim Aufbringen der Beschichtung keine Abdeckung von für den Stromübergang wichtigen Oberflächenbereichen zu erfolgen. Dies vereinfacht die Beschichtung der Stromdüse.

Zweckmäßig besteht die Beschichtung aus einem durch ein galvanisches oder chemisches Verfahren erhältlichen, aufgebrachten Kontaktsilber. Kontaktsilber lässt sich mit aparativ geringem Aufwand, mit gewünschter Schichtdicke und guter Haftung zum Material der Stromdüse aufbringen.

Die Beschichtung sollte eine im wesentlichen gleichmäßige Schichtdicke haben, vorzugsweise zwischen etwa 6 bis 10 µm.

Dabei sollte die Silberbeschichtung zumindest an der Mantelfläche und der freien Stimfläche der Stromdüse gleichmäßig vorhanden sein.

Besonders zweckmäßig ist es, jedoch die gesamten Oberflächen der Stromdüsen mit der Silberbeschichtung zu versehen. Dies vereinfacht das Vorgehen beim galvanischen oder chemischen Beschichten der Stromdüse erheblich. Die auch im Anbringungsbereich oder Kontaktbereich mit dem Düsenstock bzw. Brennerinnenrohr vorhandene Silberbeschichtung führt zu einem optimalen Stromund Wärmeübergang und leistet einen wichtigen Beitrag zur Prozeßsicherheit.

Bei einer Stromdüse mit einem Schraubansatz zum Herstellen einer Schraubverbindung mit dem Düsenstock bzw. dem Brennerinnenrohr ist auch das Außengewinde des Schraubansatzes mit der Silberbeschichtung bedeckt.

Eine Stromdüse mit einem Steckansatz zum Herstellen einer Steckverbindung mit dem Düsenstock bzw. dem Brennerinnenrohr ist auch auf den Paßflächen des Steckansatzes mit der Silberbeschichtung bedeckt.

Andere Metall-Spritzverfahren sind natürlich zum Aufbringen der Silberbeschichtung auch praktikabel.

Anhand der Zeichnung werden Ausführungsformen des Erfindungsgegenstandes beschrieben, wobei darauf hingewiesen wird, daß die zwei gezeigten Ausführungsformen nur eine nicht beschränkende Auswahl aus weiteren Ausführungsformen darstellen sollen. Es zeigen:
- Fig. 1: einen Längsschnitt eines Brennerkopfes mit einer Ausführungsform einer Stromdüse, und
- Fig. 2: einen Längsschnitt eines Teil eines Brennerkopfes mit einer anderen Ausführungsform einer Stromdüse.

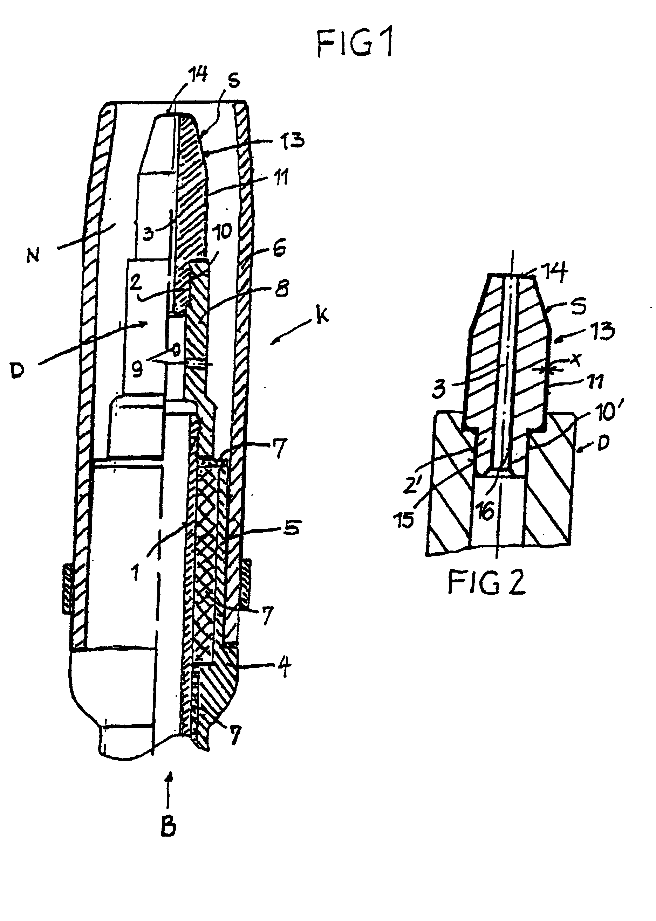

In einem Brennerkopf K eines Schutzgas-Schweißbrenners B in Fig. 1 weist ein Brenner-Innenrohr 1 an seinem freiliegenden Ende ein Außengewinde auf, auf welches bei der gezeigten Ausführungsform ein Düsenstock D lösbar angebracht ist. An einem Brenner-Außenrohr 4 ist ein Sitz 5 für ein Gasdüsen-Mundstück 6 vorgesehen. Zwischen dem Innenrohr 1 und dem Außenrohr 4 sind Isolierungen 7 angebracht, zumeist aus nichtmetallischem Material.

Der Düsenstock D ist als Hülse 8 mit Düsenbohrungen 9 und einem frontseitigen Innengewindeabschnitt 10 zum Einschrauben einer Stromdüse 13 ausgestattet. Die Stromdüse 13, die beispielsweise aus Elektrolyt-Kupfer oder aus einer Kupfer/Chrom/Zirkonium-Legierung besteht, ist mit einem Schraubansatz 2 in das Innengewinde 10 eingeschraubt und somit austauschbar befestigt. Durch die Stromdüse 13 verläuft ein Elektrodendraht-Zuführkanal 3, der an einer freien Stirnfläche 14 mündet, wobei die Stirnfläche 14 gegebenenfalls geringfügig gegenüber dem Ende des Mundstückes 6 zurückgesetzt ist. Zwischen dem Anbringungsbereich der Stromdüse 13 am Düsenstock D und der Stirnfläche 14 liegt ein äußerer Mantelbereich 11 vor.

Zumindest auf dem Mantelbereich 11 und der Stimfläche 14 ist eine Beschichtung S aus Silber vollflächig und stoffschlüssig haftend aufgebracht. Zweckmäßigerweise handelt es sich dabei um galvanisch aufgebrachtes Kontaktsilber. Die Beschichtung S kann sich jedoch auch bis auf den Schraubansatz 2 und sogar in den Durchgangskanal 3 erstrecken.

In Fig. 2 ist bei einer weiteren Ausführungsform der Stromdüse 13 eine Steckverbindung vorgesehen. Die Stromdüse 13 besitzt einen Steckansatz 2' mit Paßflächen 15, die zu entsprechenden Paßflächen 10' des Düsenstocks D passen.

Bei beiden Ausführungsformen ist die Anbringung der Stromdüse 13 am Düsenstock D gezeigt. Es ist denkbar, die Stromdüse 13 auch direkt am entsprechend modifizierten Brennerinnenrohr 1 anzubringen.

In Fig. 2 ist die Beschichtung S aus Silber, vorzugsweise aus galvanisch aufgebrachtem Kontaktsilber, so ausgebildet, daß sie die gesamte Oberfläche der Stromdüse 13 bedeckt, d.h. die Stirnfläche 14, die Mantelfläche 11, die Paßflächen 15. Die Schichtdicke X der Beschichtung S liegt zweckmäßigerweise zwischen 2 und 15 µm, vorzugsweise zwischen etwa 6 bis 10 µm.

Zum Aufbringen der Silberbeschichtung wenden mehrere Stromdüsen 13 in blankem Zustand, gegebenenfalls nach üblichen Vorreinigungsprozessen, in ein galvanisches Bad eingelegt, bis die silber-Beschichtung S mit der gewünschten Schichtdicke aufgebracht ist.

Um die Antihaftwirkung der Silberbeschichtung S zumindest temporär noch zu verbessern, besteht die Möglichkeit, ein Trennmittel aufzusprühen, zumeist eine ölige Substanz, die Zusätze enthält, mit denen die Oberfläche der Silberbeschichtung S passiviert wird, so daß sich die Antihaftwirkung verstärkt.

Die bis in den Anbringungsbereich der Stromdüse 13 am Düsenstock D bzw. dem Brennerinnenrohr 1 reichende und auch in diesem Bereich vollflächige Silber-Beschichtung verbessert den Stromübergang auf optimale Weise.

## Patentansprüche

1. Stromdüse (13) für einen Schutzgas-Schweißbrenner (B), wobei die Stromdüse (13) einen von einer Anbringungsstelle zu einer Stirnfläche längs durchgehenden Drahtdurchgangskanal (3) und auf zumindest einem Teil ihrer Oberfläche eine stoffschlüssig festhaftende metallische Beschichtung (S) aufweist, wobei diese Beschichtung (S) auf einer den Anbringungsbereich der Stromdüse (13) am Düsenstock (D) angrenzenden Mantelfläche (11) und an der freien Stirnfläche (14) der Stromdüse (13) vorgesehen ist, **dadurch gekennzeichnet, dass** die Beschichtung (S) aus einem durch ein galvanisches oder chemisches Verfahren erhältlichen, aufgebrachten Kontaktsilber besteht.

2. Stromdüse nach Anspruch 1, **dadurch gekennzeichnet, dass** die Beschichtung (S) eine im wesentlichen gleichbleibende Schichtdicke (X) zwischen 2 und 15 µm, vorzugsweise zwischen 6 bis 10 µm, aufweist.

3. Stromdüse nach Anspruch 1 oder 2, **dadurch gekennzeichnet, dass** die Beschichtung (S) auf der gesamten Oberfläche der Stromdüse (13) vorgesehen ist.

4. Stromdüse nach Anspruch 3, **dadurch gekennzeichnet, dass** die Stromdüse (13) einen Schraubansatz (12) aufweist, dessen Außengewinde ebenfalls die Beschichtung (S) aufweist.

5. Stromdüse nach einem der vorhergehenden Ansprüche, **dadurch gekennzeichnet, dass** die Stromdüse (13) einen Steckeransatz 2' aufweist, dessen Tastfläche(n) (15) ebenfalls die Beschichtung (S) aufweist.

6. Schweißbrenner (B) zum Schutzgasschweißen, mit einem innenliegenden Düsenstock (D), an dessen zum Schweißbereich weisendem Endabschnitt eine Stromdüse (13) nach einem der Ansprüche 1 bis 5 angebracht ist.

## Claims

1. Current nozzle (13) for an inert gas welding torch (B), wherein the current nozzle (13) comprises a wire passage channel (13), which goes through longitudinally from a mounting point to an end face, and a metallic coating (S), which adheres by material bonding, on at least a part of its surface, wherein this coating (S) is provided on a circumferentiai surface (11), which adjoins the mounting region of the current nozzle (13) at the nozzle stock (D), and at the free end face (14) of the current nozzle (13), **characterised in that** the coating (S) consists of a deposited contact silver able to be provided by an electroplating or chemical method.

2. Current nozzle according to claim 1, **characterised in that** the coating (S) has a substantially uniform layer thickness (X) between 2 and 15 µm, preferably between 6 to 10 µm.

3. Current nozzle according to claim 1 or 2, **characterised in that** the coating (S) is provided on the entire surface of the current nozzle (13).

4. Current nozzle according to claim 3, **characterised in that** the current nozzle (13) comprises a screw projection (2), the external thread of which similarly has the coating (S).

5. Current nozzle according to one of the preceding claims, **characterised in that** the current nozzle (13) has a plug projection (2'), the contact surface or surfaces (15) of which similarly has or have the coating (S).

6. Welding torch (B) for inert gas welding, with an inwardly disposed nozzle stock (D), at the end portion of which facing the welding region there is mounted a current nozzle (13) according to one of claims 1 to 5.

## Revendications

1. Buse à jet (13) pour un chalumeau (B) de soudage sous gaz protecteur, dans lequel la buse à jet (13) présente un canal de passage de fil (3) traversant, s'étendant longitudinalement en continu depuis une zone d'amenée jusqu'à une surface frontale et présente, sur au moins une partie de sa surface, un revêtement métallique (5) adhérent par une liaison par continuité de matière, ce revêtement (S) étant prévu sur une surface latérale (11) adjacente à la région d'amenée de la buse à jet (13) et au niveau de la surface frontale libre (14) de la buse à jet (13), **caractérisée en ce que** le revêtement (S) se compose d'un argent de contact déposé, qui peut être obtenu par un procédé galvanique ou chimique.

2. Buse à jet selon la revendication 1, **caractérisée en ce que** le revêtement (S) présente une épaisseur de couche (X) sensiblement constante, comprise entre 2 et 15 µm, de préférence entre 6 et 10 µm.

3. Buse à jet selon la revendication 1 ou 2, **caractérisée en ce que** le revêtement (S) est prévu sur toute la surface de la buse à jet (13).

4. Buse à jet selon la revendication 3, **caractérisée en ce que** la buse à jet (13) présente un embout vissé (12) dont le filetage extérieur présente aussi le revêtement (S).

5. Buse à jet selon l'une des revendications précédentes, **caractérisée en ce que** la buse à jet (13) présente un embout à emmanchement (2') dont la surface ou les surfaces de touche (15) présentent aussi le revêtement (S).

6. Chalumeau (B) pour le soudage sous gaz protecteur comprenant une embase de buse intérieure (D) au segment terminal de laquelle, qui pointe vers la région de soudage, est montée une buse à jet (13) selon l'une des revendications 1 à 5.
